# EUROPÄISCHE PATENTSCHRIFT

(11) **EP 4 005 389 B1**
(45) Veröffentlichungstag und Bekanntmachung des Hinweises auf die Patenterteilung: **17.07.2024**
(21) Anmeldenummer: 21209208.4
(22) Anmeldetag: 19.11.2021
(51) Int. Cl.: A21C 9/04, A21C 15/00, A23P 20/12

(54) **QUERVERTEILVORRICHTUNG**
TRANSVERSE DISTRIBUTION DEVICE
DISPOSITIF DE DISTRIBUTION TRANSVERSALE

(30) Priorität: 27.11.2020 DE 102020131467
(43) Veröffentlichungstag der Anmeldung: 01.06.2022
(73) Patentinhaber: Fritsch Bakery Technologies GmbH & Co. KG, 97348 Markt Einersheim (DE)
(72) Erfinder: Bernhardt, Udo, 97346 Iphofen (DE)
(74) Vertreter: Grünecker Patent- und Rechtsanwälte PartG mbB

(56) Entgegenhaltungen:
- EP-B1- 3 453 258
- DE-A1- 1 951 489
- ES-A1- 2 356 656
- US-A- 3 608 516
- US-A- 3 710 754
- US-A- 4 767 030
- US-A1- 2020 078 821
- US-B2- 9 961 908

## Beschreibung

Die Erfindung bezieht sich auf Querverteilvorrichtungen zum Verteilen von Lebensmitteln, insbesondere Streugütern zum Berieseln von Teigwaren, wie sie z. B. in Teigverarbeitungsvorrichtungen, insbesondere Streuvorrichtungen, verwendet werden.

In der EP 3 453 258 A1 wird eine Streuvorrichtung offenbart. Diese umfasst zwei parallel zueinander angeordnete Querförderschnecken. Die Querförderschnecken fördern das Streugut in entgegengesetzte Richtungen, um zu vermeiden, dass sich Ansammlungen von Streugut bilden. Solche Ansammlungen können dazu führen, dass angesammelte Streugut länger dort verbleibt und altert oder gar verdirbt. Die Förderschnecken sind übereinander angeordnet. Förderschnecken sind aus Prinzip rund, wodurch die Breite einer Förderschnecke grundsätzlich ihrer Höhe entspricht. Bei Streuvorrichtungen ist eine möglichst geringe Bauhöhe der Förderschnecken wünschenswert, da sie mitunter zwischen zwei übereinander verlaufenden Förderbändern angeordnet werden müssen. Um die Bauhöhe also möglichst gering zu halten sind die Durchmesser der Förderschnecken im Stand der Technik klein gehalten, was zu einer relativ geringen Breite führt. Um ein ausreichendes Vorratsvolumen zu erreichen, ist seitlich ein Vorratsbehälter vorgesehen, der breiter als die Förderschnecken ist. Um einen möglichst reibungslosen Streugutfluss zu gewährleisten sieht der Stand der Technik ein Rührwerk im Vorratsbehälter vor. Die US 2020/078821 A1 offenbart eine Querverteilvorrichtung zum Verteilen von schüttfähigen Lebensmitteln nach dem Stand der Technik.

Es ist eine Aufgabe der Erfindung, eine verbesserte Querverteilvorrichtung anzugeben, die sowohl in der Herstellung also auch im Betrieb eine höhere Effizienz ermöglicht.

Diese Aufgabe wird gelöst durch eine Querverteilvorrichtung mit den Merkmalen des Anspruchs 1. Vorteilhafte Weiterbildungen sind in den abhängigen Ansprüchen angegeben.

Es wird eine Querverteilvorrichtung zum Verteilen von schüttfähigen Lebensmitteln, insbesondere Streugütern zum Berieseln von Teigwaren, offenbart. Die Querverteilvorrichtung umfasst einen Trog, der an einer Auslassseite eine Öffnung aufweist. Sie umfasst des Weiteren eine Förderbaugruppe, die in dem Trog angeordnet und dazu konfiguriert ist, schüttfähiges Lebensmittel in eine erste Richtung und in eine zweite, der ersten Richtung entgegengesetzten Richtung zu fördern. Die Förderbaugruppe weist einen ersten Drehförderer, der zum Fördern des schüttfähigen Lebensmittels in die erste Richtung konfiguriert ist, und einen zweiten Drehförderer, der zum Fördern des schüttfähigen Lebensmittels in die zweite Richtung konfiguriert ist, auf. Die Querverteilvorrichtung zeichnet sich dadurch aus, dass der erste Drehförderer umlaufend um den zweiten Drehförderer herum angeordnet ist.

Diese Anordnung der Drehförderer kann eine breitere Bauform der Förderbaugruppe ermöglichen, ohne dass die Bauhöhe vergrößert werden muss. Dadurch kann der Trog, in dem die Förderbaugruppe angeordnet ist, mit der gleichen Breite ausgeführt werden wie ein Vorratsbehälter, wodurch auf ein Rührwerk im Vorratsbehälter verzichtet werden kann. Dies kann die Herstellung deutlich vereinfachen.

Des Weiteren kann der Trog ohne Hinterschneidungen ausgeführt werden. Dadurch kann zum einen die Reinigung des Trogs selbst erleichtert werden. Zum anderen kann eine Entnahme der Förderbaugruppe nach oben aus dem Trog heraus ermöglicht werden. Beides in Kombination kann eine Beschleunigung des Reinigungsvorgangs ermöglichen. Bei der Anordnung der Förderschnecken aus dem Stand der Technik muss die Wandung, in welcher die Querförderschnecken angeordnet sind, speziell geformt sein, damit diese ihre Funktion erfüllen können. Da in der vorliegend offenbarten Anordnung auf solche Hinterschneidungen verzichtet werden kann, kann die Reinigung des Troges wie auch die Entnahme der Förderbaugruppe aus dem Trog heraus erleichtert werden.

Darüber hinaus weist die um den zweiten Drehförderer umlaufende Anordnung des ersten Drehförderers einen überraschenden zusätzlichen Vorteil auf, denn dadurch kann bereits bei einem geringeren Füllstand des Trogs damit begonnen werden, das schüttfähige Lebensmittel in die zweite Richtung zu fördern. Verglichen mit dem Stand der Technik in Form der EP 3 453 258 A1, in der die komplette untere Förderschnecke befüllt sein muss, bevor mit dem Rückfördern begonnen wird, wird das Streugut durch die in der vorliegenden Anmeldung beschriebene Querverteilvorrichtung schonender verarbeitet.

Als Drehförderer kann eine Vorrichtung angesehen werden, die durch eine Dreh- und/oder Rotationsbewegung ein Schüttgut fördern kann. Vorzugsweise kann ein Drehförderer eine Vorrichtung sein, die dazu konfiguriert ist, durch eine Drehung und/oder Rotation um eine Achse ein Schüttgut, insbesondere schüttfähige Lebensmittel, in einer Richtung zu fördern, die im Wesentlichen parallel zu der Achse orientiert ist. Als eine Auslassseite kann eine Seite des Trogs angesehen werden, an der das schüttfähige Lebensmittel aus dem Trog heraustritt. Alternativ oder zusätzlich kann es sich um eine Unterseite des Trogs handeln.

Es ist vorteilhaft, wenn der erste und der zweite Drehförderer koaxial zueinander angeordnet sind. Insbesondere können der erste und der zweite Drehförderer um eine gemeinsame Achse drehbar sein. Dies kann eine kompaktere Bauart ermöglichen, bspw. durch gemeinsame Lagervorrichtungen.

Denkbar ist, dass der erste und der zweite Drehförderer unabhängig voneinander antreibbar sind. Dadurch kann ein Verhältnis zwischen der Förderrate in der ersten Richtung und einer Förderrate in die zweite Richtung flexibel eingestellt werden, bspw. um es an unterschiedliche Streugüter anzupassen. Um einen unabhängigen Antrieb der Drehförderer zu erreichen, können z. B. je eine Antriebseinheit pro Drehförderer vorgesehen sein, die insbesondere jeweils einen Elektromotor umfassen kann.

Es ist vorstellbar, dass der erste und der zweite Drehförderer miteinander verbunden sind, sodass sie relativ zueinander unbeweglich sind. Dadurch kann die Konstruktion der Querverteilvorrichtung vereinfacht werden, bspw. da zum Antreiben beider Drehförderer nur eine einzige Antriebseinheit erforderlich ist. Auch der Reinigungsprozess kann durch die Verbindung der Drehförderer beschleunigt werden, da sie gemeinsam aus der Querverteilvorrichtung entnommen werden können.

Der erste Drehförderer kann eine erste Helix umfassen. Als eine Helix kann eine Struktur angesehen werden, die sich um einen zylinderförmigen Hohlraum windet und dabei in einer axialen Richtung des Zylinders eine Steigung aufweist, die ungleich Null und vorzugsweise konstant ist. Die erste Helix kann einen runden oder rechteckigen, insbesondere quadratischen, Querschnitt aufweisen. Eine Helix kann eine besonders einfache und effektive Art darstellen, den ersten Drehförderer umlaufend um den zweiten Drehförderer herum anzuordnen. Darüber hinaus kann eine Helix das Risiko einer unerwünschten Kompression des schüttfähigen Lebensmittels reduzieren und auf eine schonendere Art auf das Lebensmittel einwirken. Der Einsatz einer Helix kann daher insbesondere bei empfindlicheren Lebensmitteln vorteilhaft sein.

Es ist denkbar, dass der zweite Drehförderer eine Förderschnecke umfasst. Als eine Förderschnecke kann eine Struktur angesehen werden, bei der eine Förderflanke um eine Kernwelle windet und dabei in einer axialen Richtung der Kernwelle eine Steigung aufweist, die ungleich Null und vorzugsweise konstant ist. Die Förderflanke kann dabei direkt mit der Kernwelle verbunden sein, insbesondere entlang der gesamten Länge der Förderflanke. Eine Förderschnecke kann eine effizientere Förderung des schüttfähigen Lebensmittels ermöglichen. Dies kann insbesondere bei unempfindlicheren Lebensmitteln vorteilhaft sein

Es ist vorstellbar, dass der zweite Drehförderer eine zweite Helix umfasst. Die zweite Helix kann einen runden oder rechteckigen, insbesondere quadratischen, Querschnitt aufweisen. Wie bereits erwähnt, kann eine Helix das Risiko einer unerwünschten Kompression des schüttfähigen Lebensmittels reduzieren und auf eine schonendere Art auf das Lebensmittel einwirken. Der Einsatz einer Helix kann daher insbesondere bei empfindlicheren Lebensmitteln vorteilhaft sein.

Es kann vorteilhaft sein, wenn die Förderbaugruppe eine Stabilisierungswelle aufweist, die mit dem zweiten Drehförderer verbunden ist und dadurch die Steifigkeit des zweiten Drehförderers erhöht. Dies kann insbesondere dann der Fall sein, wenn der zweite Drehförderer eine zweite Helix umfasst, da diese im Gegensatz zu einer Förderschnecke keine Kernwelle aufweist.

Es sollte klar sein, dass der zweite Drehförderer auch eine Förderschnecke und eine zweite Helix aufweisen kann. Diese können z. B. in axialer Richtung des zweiten Drehförderers nacheinander und/oder nebeneinander angeordnet sein.

Die Erfindung bezieht sich auch auf eine Streuvorrichtung für eine Teigbearbeitungsvorrichtung, umfassend einen Vorratsbehälter, der zum Aufnehmen von schüttfähigen Lebensmitteln, insbesondere Streugütern zum Berieseln von Teigwaren, konfiguriert ist, und eine Querverteilvorrichtung der vorstehend beschriebenen Art. Durch die Querverteilvorrichtung kann schüttfähiges Lebensmittel entlang des Troges aus dem Vorratsbehälter heraus gefördert und auf einer gewünschten Breite, die z. B. der Länge des Troges entsprechen kann, verteilt werden. Wie bereits erwähnt, kann dadurch auch vermieden werden, dass sich Lebensmittel an einer oder mehreren Stellen über längere Zeit ansammelt.

Die Streuvorrichtung kann des Weiteren eine Streuwalze umfassen, die an der Auslassseite des Trogs drehbar angeordnet und dazu konfiguriert ist, durch die Öffnung des Trogs hindurchgeförderte Lebensmittel aufzunehmen. Die Streuwalze kann dazu konfiguriert sein, eine gewünschte Menge des schüttfähigen Lebensmittels auf ein darunter befindliches Teigprodukt fallen zu lassen. Durch den Einsatz der Streuwalze kann die auf das Teigprodukt aufgetragene Menge genauer und/oder unabhängig von dem Füllstand der Querverteilvorrichtung dosiert werden

Es ist vorteilhaft, wenn der Vorratsbehälter die gleiche Breite aufweist wie der Trog. Dadurch kann der Streugutfluss innerhalb des Vorratsbehälters und/oder der Streugutfluss von dem Vorratsbehälter in den Trog erleichtert werden. Vorteilhafterweise kann dies die Anordnung eines Rührwerks in dem Vorratsbehälter überflüssig machen.

Die Erfindung bezieht sich auch auf eine Teigbearbeitungsvorrichtung zum Verarbeiten von Teig, insbesondere zum Erzeugen von Backwaren, mit einer Streuvorrichtung der vorstehend beschriebenen Art und einer Fördervorrichtung, die dazu konfiguriert ist, Teigwaren unter der Streuvorrichtung hindurch zu fördern. Die Querverteilvorrichtung kann dazu konfiguriert sein, schüttfähiges Lebensmittel entlang des Troges aus dem Vorratsbehälter heraus zu fördern und entlang einer Breite der Fördervorrichtung zu verteilen.

Die Erfindung bezieht sich auf Vorrichtungen der vorstehend beschriebenen Art. Im Folgenden wird eine beispielhafte Ausführungsform anhand von Zeichnungen näher erläutert.
- Fig. 1: zeigt eine schematische Perspektivansicht einer Teigverarbeitungsvorrichtung mit einer Streuvorrichtung.
- Fig. 2: zeigt eine schematische Schnittansicht der Streuvorrichtung aus Fig. 1, wobei der Verlauf der Schnittebene in Fig. 1 durch die Linie II-II angedeutet ist.
- Fig. 3: zeigt eine weitere schematische Schnittansicht der Streuvorrichtung aus den Fig. 1 und 2, wobei der Verlauf der Schnittebene in Fig. 2 durch die Linie III-III angedeutet ist.
- Fig. 4: zeigt eine schematische Schnittansicht einer Streuvorrichtung gemäß einem weiteren Ausführungsbeispiel, wobei die Ansicht der aus Fig. 2 ähnelt.
- Fig. 5: zeigt eine weitere schematische Schnittansicht der Streuvorrichtung aus Fig. 4, wobei der Verlauf der Schnittebene in Fig. 4 durch die Linie V-V angedeutet ist.
- Fig. 6: zeigt eine schematische Schnittansicht einer Streuvorrichtung gemäß einem weiteren Ausführungsbeispiel, wobei die Ansicht denen aus Fig. 2 und Fig. 4 ähnelt.
- Fig. 7: zeigt eine weitere schematische Schnittansicht der Streuvorrichtung aus Fig. 6, wobei der Verlauf der Schnittebene in Fig. 4 durch die Linie VII-VII angedeutet ist.
- Fig. 8: zeigt eine schematische Schnittansicht einer Streuvorrichtung gemäß einem weiteren Ausführungsbeispiel, wobei die Ansicht denen aus Fig. 2, Fig. 4 und Fig. 6 ähnelt.

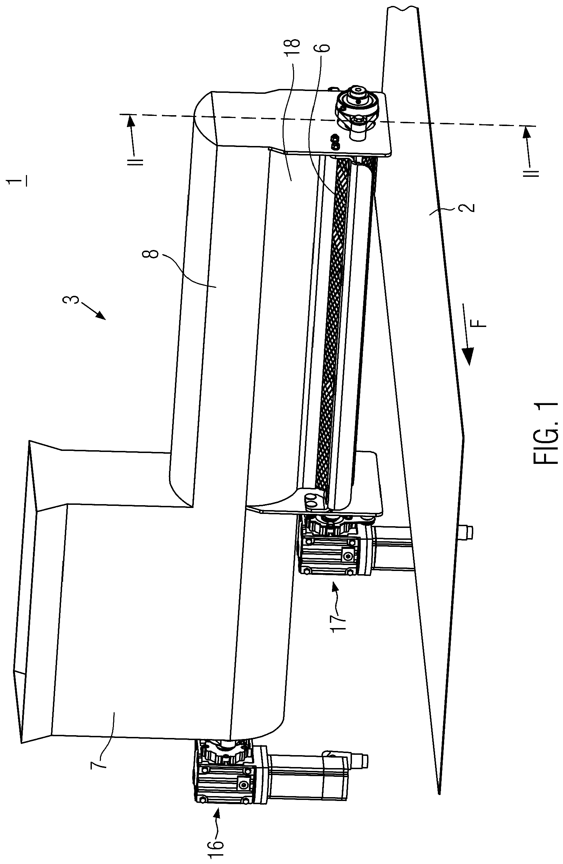

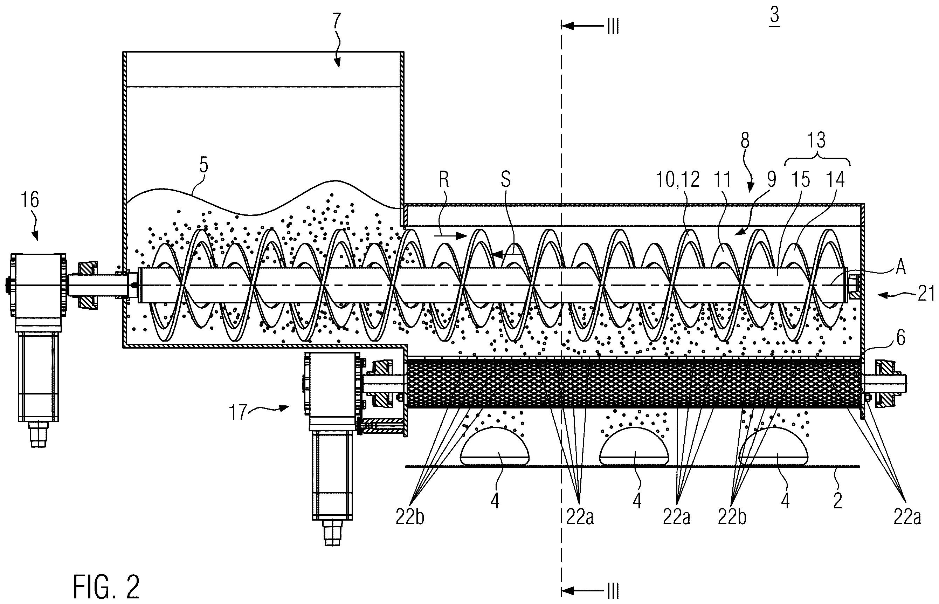

In Figur 1 ist eine Teigbearbeitungsvorrichtung 1 in einer schematischen, perspektivischen Ansicht dargestellt. Es ist zu sehen, dass die Teigbearbeitungsvorrichtung 1 eine Fördervorrichtung 2 umfassen kann. Die Teigbearbeitungsvorrichtung 1 kann des Weiteren eine Streuvorrichtung 3 umfassen. Die Fördervorrichtung 2 kann dazu konfiguriert sein, Teigwaren 4 (siehe Figur 2) unter der Streuvorrichtung 2 hindurch zu fördern. Die Streuvorrichtung 3 kann dazu konfiguriert sein, die Teigwaren 4 mit einem schüttfähigen Lebensmittel, insbesondere Streugütern 5 (siehe Figur 2), zu bestreuen. Dazu kann die Streuvorrichtung 3 eine Streuwalze 6 aufweisen, deren Funktion später noch genauer erläutert werden wird.

Die Streuvorrichtung 3 kann einen Vorratsbehälter 7 umfassen. Der Vorratsbehälter 7 kann zum Aufnehmen der schüttfähigen Lebensmittel, im vorliegenden Ausführungsbeispiel des Streuguts 5, konfiguriert sein. Die Streuvorrichtung 3 kann des Weiteren eine Querverteilvorrichtung 8 umfassen. Die Querverteilvorrichtung 8 kann dazu konfiguriert sein, das Streugut 5 aus dem Vorratsbehälter 7 heraus in einer Richtung quer zu einer Förderrichtung F der Fördervorrichtung 2 zu fördern. Dadurch kann das Streugut 5 entlang einer Breite der Fördervorrichtung 2 verteilt werden.

In Figur 2 ist eine Schnittansicht der Streuvorrichtung 3 dargestellt, wobei die Schnittebene in der in Figur 1 durch die Linie II-II angedeuteten Richtung verläuft. Nun ist zu erkennen, dass die Querverteilvorrichtung 8 eine Förderbaugruppe 9 umfasst.

Die Förderbaugruppe 9 ist dazu konfiguriert, schüttfähiges Lebensmittel, im vorliegenden Ausführungsbeispiel das Streugut 5, in eine erste Richtung R und in eine zweite Richtung S zu fördern. Dabei ist die zweite Richtung S der ersten Richtung R entgegengesetzt orientiert.

Wie im vorliegenden Ausführungsbeispiel umfasst die Förderbaugruppe 9 einen ersten Drehförderer 10, der zum Fördern des schüttfähigen Lebensmittels in die erste Richtung R konfiguriert ist. Des Weiteren umfasst die Förderbaugruppe 9 einen zweiten Drehförderer 11, der dazu eingerichtet ist, schüttfähiges Lebensmittel in die zweite Richtung S zu fördern. Wie im Ausführungsbeispiel gemäß Figur 2 zu erkennen, ist der erste Drehförderer 10 umlaufend um den zweiten Drehförderer 11 herum angeordnet. Insbesondere kann der erste Drehförderer 10 eine erste Helix 12 umfassen.

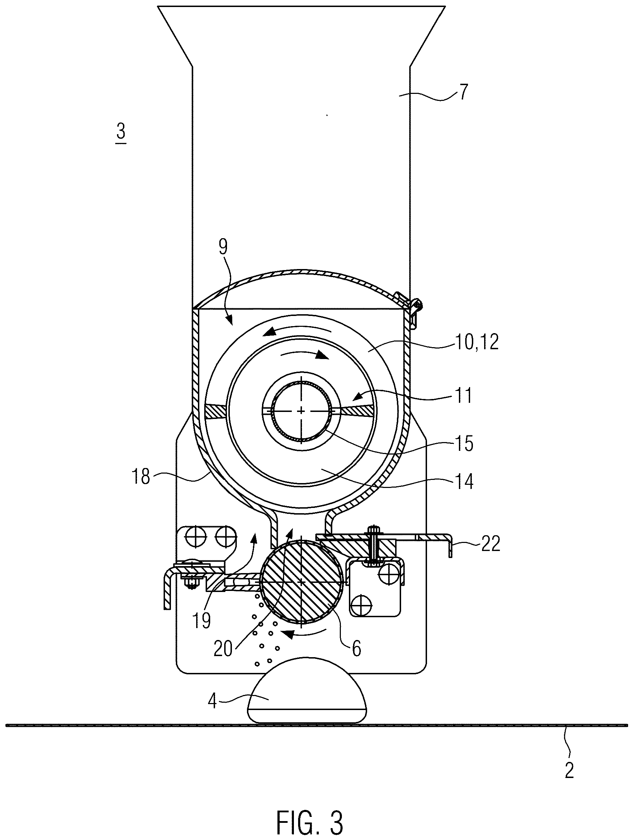

Wie im vorliegenden Ausführungsbeispiel können der erste Drehförderer 10 und der zweite Drehförderer 11 koaxial zueinander angeordnet sein. Insbesondere können der erste Drehförderer 10 und der zweite Drehförderer 11 um eine gemeinsame Förderachse A drehbar sein. In Figur 2 ist zu erkennen, dass der zweite Drehförderer 11 eine Förderschnecke 13 umfassen kann. Die Förderschnecke 13 kann eine Förderflanke 14 und eine Kernwelle 15 aufweisen. Wie besser aus Figur 3 ersichtlich, kann die Kernwelle 15 wie im vorliegenden Ausführungsbeispiel als Rohr ausgeführt sein.

Wie im in Figur 2 dargestellten Ausführungsbeispiel können der erste Drehförderer 10 und der zweite Drehförderer 11 miteinander verbunden sein, sodass sie relativ zueinander unbeweglich sind. Insbesondere, aber nicht ausschließlich, in einem solchen Fall können der erste Drehförderer 10 und der zweite Drehförderer 11 durch einen gemeinsamen Förderantrieb 16 antreibbar sein. In Figur 2 ist darüber hinaus ein Streuwalzenantrieb 17 zu erkennen, der zum Antreiben der Streuwalze 6 vorgesehen sein kann. Zum Verbinden des ersten Drehförderers 10 und des zweiten Drehförderers 11 sind z. B. Schweißverbindungen denkbar.

In Figur 3 ist eine weitere Schnittansicht der Streuvorrichtung 3 dargestellt, wobei die Schnittebene in Figur 2 durch die Linie III-III angedeutet ist. Dadurch ist besser zu erkennen, dass die Querverteilvorrichtung 8 einen Trog 18 umfassen kann.

Die Förderbaugruppe 9 kann in dem Trog 18 angeordnet sein. Der Trog 18 kann eine Auslassseite 19 aufweisen. An der Auslassseite 19 kann eine Öffnung 20 vorgesehen sein. Die Öffnung 20 kann dazu konfiguriert sein, ein Herausfördern des schüttfähigen Lebensmittels, insbesondere des Streuguts 5, aus dem Trog 18 an der Auslassseite 19 zu ermöglichen. Die Streuwalze 6 kann dazu konfiguriert sein, durch die Öffnung 20 hindurch gefördertes Streugut 5 aufzunehmen. Durch Drehen der Streuwalze 6 können unter der Streuvorrichtung 3 hindurchgeförderte Teigwaren 4 gezielt berieselt werden.

Der Betrieb der Streuvorrichtung 3 kann wie folgt beschrieben werden. Zunächst kann Streugut 5 in den Vorratsbehälter 7 eingefüllt werden. Das Streugut 5 kann dann zunächst durch den ersten Drehförderer 10 in der ersten Richtung R aus dem Vorratsbehälter 7 heraus gefördert werden. Um eine Berieselung der Teigwaren 4 mit dem Streugut 5 über die gesamte Breite der Fördervorrichtung 2 zu ermöglichen, muss zunächst der Trog 18 über seine gesamte Länge bis zu einem gewissen Maß befüllt werden. Um zu vermeiden, dass dabei Streugut 5 an einem dem Vorratsbehälter 7 gegenüberliegenden Ende 21 des Trogs komprimiert wird, kann das Streugut 5 durch den zweiten Drehförderer 11 in der zweiten Richtung S gefördert werden, sobald der Füllstand des Troges 18 so hoch ist, dass die Förderflanke 14 des zweiten Drehförderers 11 mit dem Streugut 5 in Kontakt kommt.

In Figur 3 ist darüber hinaus zu erkennen, dass die Streuvorrichtung 3 einen oder mehrere Schieber 22 umfassen kann. Der Schieber 22 kann dazu konfiguriert sein, die Öffnung 20 abschnittsweise und selektiv zu öffnen und/oder zu verschließen. Dadurch kann die Größe der Öffnung 20 gezielt an die zu berieselnden Teigwaren 4 angepasst werden. Wie in Figur 2 zu sehen, können durch Verschließen der Öffnung 20 durch die Schieber 22a und Öffnen der Schieber 22b nur solche Bereiche der Öffnung 20 offen gelassen werden, unter denen auch Teigwaren 4 hindurch gefördert werden.

Auch in solchen Fällen ist die Erfindung vorteilhaft, da auch bei durch die Schieber 22a begrenzter austretender Streugutmenge nicht zwingend eine Anpassung der Drehzahl der Förderbaugruppe 9 erfolgen muss, da bei steigendem Füllstand des Troges 18 das Streugut 5 automatisch durch den zweiten Drehförderer 11 zurück in den Vorratsbehälter 7 gefördert wird.

Im Folgenden werden weitere Ausführungsformen beispielhaft erläutert. Diese unterscheiden sich im Wesentlichen durch verschiedene Ausführungen der Förderbaugruppe 9 von dem vorstehend beschriebenen Ausführungsbeispiel. Auf Komponenten, die im Folgenden nicht nochmals näher erläutert werden, können die Erläuterungen aus der vorstehenden Beschreibung des ersten Ausführungsbeispiels anwendbar sein.

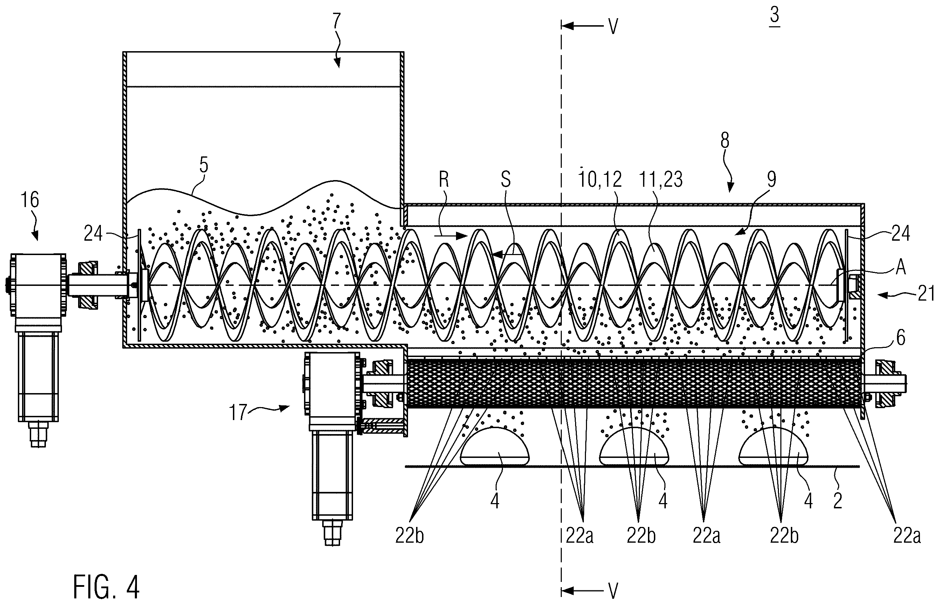

In Figur 4 ist die Streuvorrichtung 3 gemäß einem weiteren Ausführungsbeispiel dargestellt. Die Ansicht ähnelt derjenigen aus Figur 2. Anders als im vorherigen Ausführungsbeispiel umfasst der zweite Drehförderer 11 keine Förderschnecke. Der zweite Drehförderer 11 kann, wie im nun beschriebenen Ausführungsbeispiel, eine zweite Helix 23 umfassen. Wie in Figur 4 zu erkennen, kann der erste Drehförderer 10, im vorliegenden Ausführungsbeispiel die erste Helix 12, umlaufend um den zweiten Drehförderer 11, im vorliegenden Ausführungsbeispiel die zweite Helix 23, herum angeordnet sein. Wie im vorliegenden Ausführungsbeispiel, können der erste Drehförderer 10, insbesondere die erste Helix 12, und der zweite Drehförderer 11, insbesondere die zweite Helix 23, koaxial zueinander angeordnet sein. Vorteilhafterweise können der erste Drehförderer 10, insbesondere die erste Helix 12, und der zweite Drehförderer 11, insbesondere die zweite Helix 23, um eine gemeinsame Förderachse A drehbar sein.

Die Steifigkeit der Förderbaugruppe 9 kann erhöht werden, indem die erste Helix 12 und die zweite Helix 23 relativ zueinander unbeweglich miteinander verbunden sind. Dazu sind z. B. Schweißverbindungen denkbar. Alternativ oder zusätzlich kann an einem oder beiden Enden der Förderbaugruppe 9 jeweils eine Stirnplatte 24 vorgesehen sein. Die Stirnplatte 24 kann ebenfalls die Steifigkeit der Förderbaugruppe 9 erhöhen. Eine unbewegliche Verbindung zwischen der ersten und der zweiten Helix 12, 23 kann bspw. durch eine oder mehrere direkte Verbindungen zwischen der ersten und der zweiten Helix 12, 23 realisiert werden un/oder durch eine oder mehrere Verbindungen der jeweiligen Helix mit einer oder mehreren Stirnplatten 24.

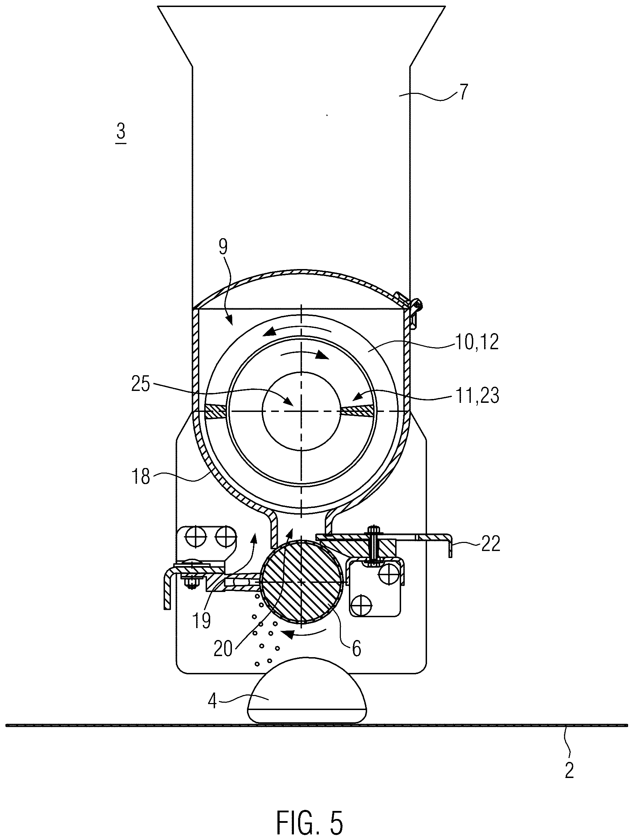

In Figur 5 ist eine Schnittansicht der Streuvorrichtung aus Figur 4 dargestellt, wobei die Schnittebene in Figur 4 durch die Linie V-V angedeutet ist. So wird besser erkennbar, dass die Förderbaugruppe 9 gemäß diesem Ausführungsbeispiel einen Hohlraum 25 aufweisen kann. Der erste Drehförderer 10, insbesondere die erste Helix 12, und/oder der zweite Drehförderer 11, insbesondere die zweite Helix 23, können jeweils umlaufend um den Hohlraum 25 herum angeordnet sein. Der Hohlraum 25 kann den Förderfluss in die zweite Richtung S erleichtern. Dadurch kann das Risiko von Streugutstauungen verringert werden. Dies kann vorteilhaft sein, da Stauungen zu Komprimierungen des Streuguts 5 führen können, die insbesondere bei empfindlichen Streugütern 5 unerwünscht sein können.

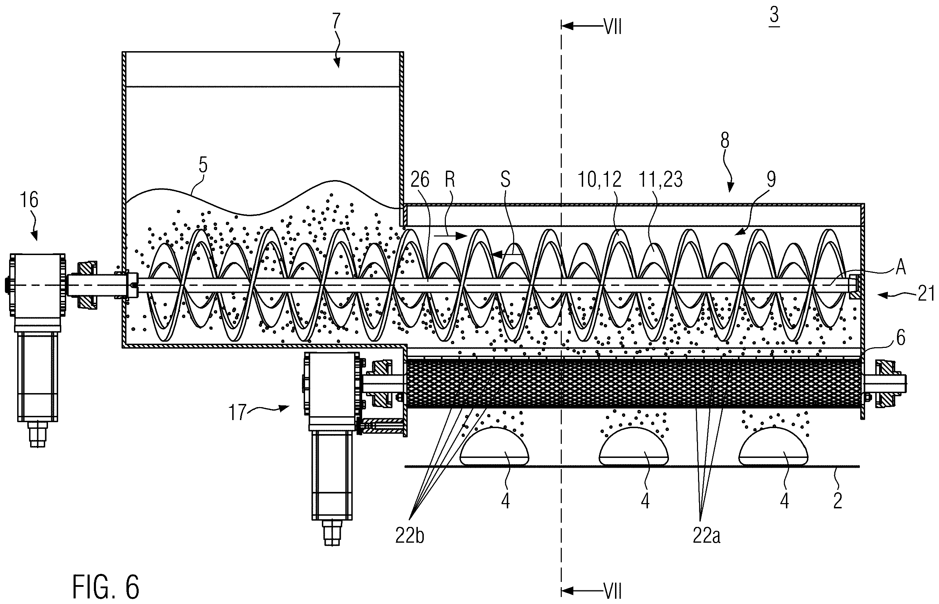

In Figur 6 ist die Streuvorrichtung 3 gemäß einem weiteren Ausführungsbeispiel dargestellt. Die Ansicht ähnelt denjenigen aus Figur 2 und Figur 4. Ähnlich dem mit Bezug auf Figur 4 beschriebenen Ausführungsbeispiel kann der zweite Drehförderer 11 gemäß dem vorliegenden Ausführungsbeispiel eine zweite Helix 23 umfassen. Wie in Figur 6 zu erkennen, kann der erste Drehförderer 10, im vorliegenden Ausführungsbeispiel die erste Helix 12, umlaufend um den zweiten Drehförderer 11, im vorliegenden Ausführungsbeispiel die zweite Helix 23, herum angeordnet sein. Wie im vorliegenden Ausführungsbeispiel, können der erste Drehförderer 10, insbesondere die erste Helix 12, und der zweite Drehförderer 11, insbesondere die zweite Helix 23, koaxial zueinander angeordnet sein. Vorteilhafterweise können der der erste Drehförderer 10, insbesondere die erste Helix 12, und der zweite Drehförderer 11, insbesondere die zweite Helix 23, um eine gemeinsame Förderachse A drehbar sein.

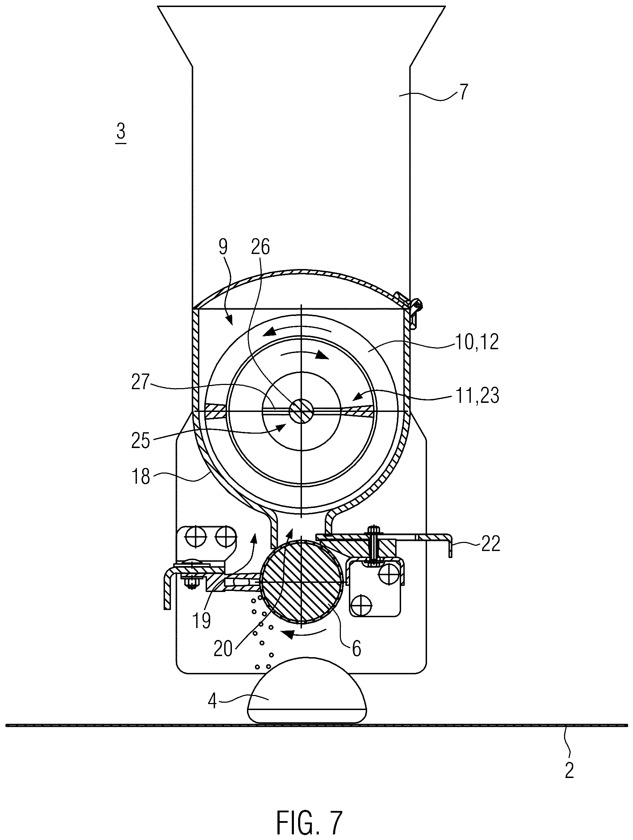

Wie im vorliegenden Ausführungsbeispiel, kann die Förderbaugruppe 9 eine Stabilisierungswelle 26 umfassen. Die Stabilisierungswelle 26 kann mit dem ersten Drehförderer 10, insbesondere der ersten Helix 12, und/oder dem zweiten Drehförderer 11, insbesondere der zweiten Helix 23, verbunden sein. Z. B. kann die Stabilisierungswelle 26 durch einen oder mehrere Stege 27 (s. Figur 7) mit dem ersten Drehförderer 10, insbesondere der ersten Helix 12, und/oder dem zweiten Drehförderer 11, insbesondere der zweiten Helix 23, verbunden sein. Die mit Bezug auf Figur 4 erläuterten Versteifungsmaßnahmen, wie z. B: die Verbindung zwischen der ersten und der zweiten Helix 12, 23, können zusätzlich zu der Stabilisierungswelle 26 vorgesehen sein. Der Durchmesser der Stabilisierungswelle 26 kann so gewählt sein, dass, ähnlich dem vorhergehenden Beispiel, zwischen ihr und der zweiten Helix 23 ein Hohlraum 25 verbleibt. So können die Vorteile einer höheren Steifigkeit und eines erleichterten Streugutflusses kombiniert werden.

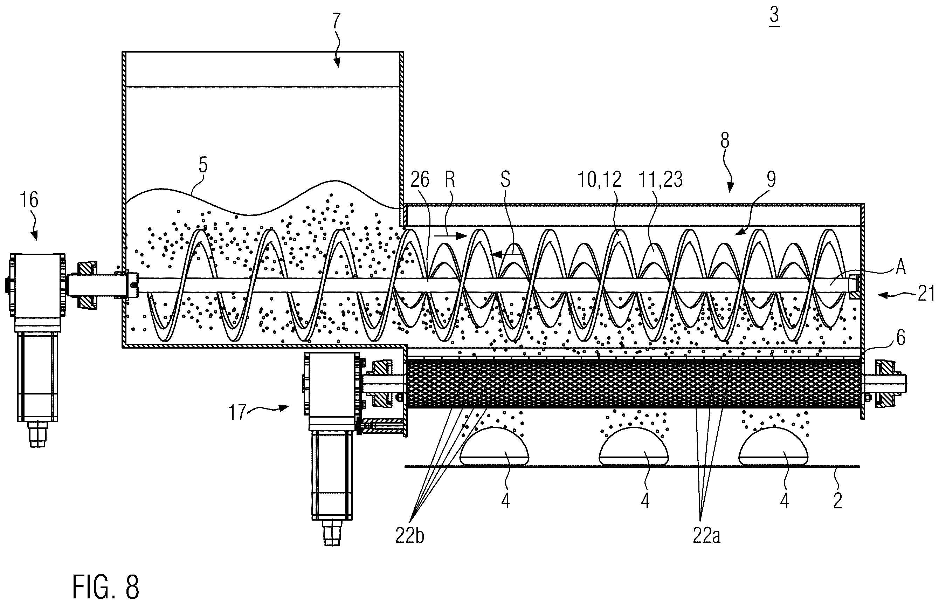

In Figur 8 ist die Streuvorrichtung 3 gemäß einem weiteren Ausführungsbeispiel dargestellt. Die Ansicht ähnelt denjenigen aus Figur 2, Figur 4 und Figur 6. Wie in Figur 8 zu erkennen, kann der zweite Drehförderer 11 eine kürzere Förderlänge aufweisen als der erste Drehförderer 10. Als Förderlänge eines Drehförderers kann eine Länge angesehen werden, entlang derer Schüttgut durch den jeweiligen Drehförderer förderbar ist. In Figur 8 entspricht die Förderlänge des zweiten Drehförderers 11 der axialen Länge der zweiten Helix 23. Im Falle der Förderschnecke 13 kann die Förderlänge der axialen Länge der Förderflanke 14 entsprechen. Ein durchgehender zweiter Drehförderer 11, wie er in den Ausführungsbeispielen aus den Figuren 2 bis 7 dargestellt ist, kann den Vorteil aufweisen, dass im Vorratsbehälter 7 eine bessere Durchmischung des Streugutes 5 ermöglicht werden kann. Durch eine kürzere Förderlänge des zweiten Drehförderers 11 kann Material eingespart werden.

## Patentansprüche

1. Querverteilvorrichtung (8) zum Verteilen von schüttfähigen Lebensmitteln, insbesondere Streugütern (5) zum Berieseln von Teigwaren (4), umfassend:
einen Trog (18), der an einer Auslassseite (19) eine Öffnung (20) aufweist, und
eine Förderbaugruppe (9), die in dem Trog (18) angeordnet und dazu konfiguriert ist, schüttfähiges Lebensmittel in eine erste Richtung (R) und in eine zweite, der ersten Richtung (R) entgegengesetzten Richtung (S) zu fördern, wobei die Förderbaugruppe (9) einen ersten Drehförderer (10), der zum Fördern des schüttfähigen Lebensmittels in die erste Richtung (R) konfiguriert ist, und einen zweiten Drehförderer (11), der zum Fördern des schüttfähigen Lebensmittels in die zweite Richtung (S) konfiguriert ist, aufweist,
**dadurch gekennzeichnet, dass** der erste Drehförderer (10) umlaufend um den zweiten Drehförderer (11) herum angeordnet ist.

2. Querverteilvorrichtung nach Anspruch 1, wobei der erste und der zweite Drehförderer (10, 11) koaxial zueinander angeordnet sind.

3. Querverteilvorrichtung nach einem der vorangehenden Ansprüche, wobei der erste und der zweite Drehförderer (10,11) unabhängig voneinander antreibbar sind.

4. Querverteilvorrichtung nach Anspruch 1 oder 2, wobei der erste und der zweite Drehförderer (10,11) miteinander verbunden sind, sodass sie relativ zueinander unbeweglich sind.

5. Querverteilvorrichtung nach einem der vorangehenden Ansprüche, wobei der erste Drehförderer (10) eine erste Helix (12) umfasst.

6. Querverteilvorrichtung nach einem der vorangehenden Ansprüche, wobei der zweite Drehförderer (11) eine Förderschnecke (13) umfasst.

7. Querverteilvorrichtung nach einem der vorangehenden Ansprüche, wobei der zweite Drehförderer (11) eine zweite Helix (23) umfasst.

8. Querverteilvorrichtung nach einem der vorangehenden Ansprüche, wobei die Förderbaugruppe (9) eine Stabilisierungswelle (26) aufweist, die mit dem zweiten Drehförderer (11) verbunden ist und dadurch die Steifigkeit des zweiten Drehförderers (11) erhöht.

9. Streuvorrichtung (3) für eine Teigbearbeitungsvorrichtung (1), umfassend einen Vorratsbehälter (7), der zum Aufnehmen von schüttfähigen Lebensmitteln, insbesondere Streugütern (5) zum Berieseln von Teigwaren (4), konfiguriert ist, und eine Querverteilvorrichtung (8) nach einem der vorangehenden Ansprüche.

10. Streuvorrichtung nach Anspruch 9, des Weiteren umfassend eine Streuwalze (6), die an der Auslassseite (19) des Trogs (18) drehbar angeordnet und dazu konfiguriert ist, durch die Öffnung (20) des Trogs (18) hindurchgeförderte Lebensmittel aufzunehmen.

11. Streuvorrichtung nach Anspruch 9 oder 10, wobei der Vorratsbehälter (7) die gleiche Breite aufweist wie der Trog (18).

12. Teigbearbeitungsvorrichtung (1) zum Verarbeiten von Teig, insbesondere zum Erzeugen von Teigwaren (4), mit einer Streuvorrichtung (3) gemäß einem der Ansprüche 9 bis 11 oder einer Querverteilvorrichtung gemäß einem der Ansprüche 1 bis 8 und mit einer Fördervorrichtung (2), die dazu konfiguriert ist, Teigwaren (4) unter der Streuvorrichtung (3) hindurch zu fördern.

## Claims

1. Transverse-distribution device (8) for distributing pourable foodstuffs, in particular spreading materials (5) for sprinkling pasta (4), comprising:
a trough (18) which has an opening (20) on one outlet side (19), and
a conveyor assembly (9) arranged in the trough (18) and configured to convey pourable foodstuff in a first direction (R) and in a second direction (S) opposite to the first direction (R), the conveyor assembly (9) comprising a first rotary conveyor (10) configured to convey the pourable foodstuff in the first direction (R) and a second rotary conveyor (11) configured to convey the pourable foodstuff in the second direction (S),
**characterised in that** the first rotary conveyor (10) is arranged around the second rotary conveyor (11).

2. Transverse-distribution device according to claim 1, wherein the first and second rotary conveyors (10, 11) are arranged coaxially to one another.

3. Transverse-distribution device according to one of the preceding claims, wherein the first and second rotary conveyors (10, 11) can be driven independently of one another.

4. Transverse-distribution device according to claim 1 or 2, wherein the first and second rotary conveyors (10, 11) are connected to each other so that they are immovable relative to each other.

5. Transverse-distribution device according to one of the preceding claims, wherein the first rotary conveyor (10) comprises a first helix (12).

6. Transverse-distribution device according to one of the preceding claims, wherein the second rotary conveyor (11) comprises a screw conveyor (13).

7. Transverse-distribution device according to one of the preceding claims, wherein the second rotary conveyor (11) comprises a second helix (23).

8. Transverse-distribution device according to one of the preceding claims, wherein the conveyor assembly (9) comprises a stabilizing shaft (26) which is connected to the second rotary conveyor (11) and thereby increases the rigidity of the second rotary conveyor (11).

9. Spreading device (3) for a dough processing apparatus (1), comprising a storage container (7) configured to receive pourable foodstuffs, in particular sprinkling materials (5) for sprinkling pasta (4), and a transverse-distribution device (8) according to one of the preceding claims.

10. Spreading device according to claim 9, further comprising a spreading roller (6) which is rotatably arranged at the outlet side (19) of the trough (18) and is configured to receive foodstuffs conveyed through the opening (20) of the trough (18).

11. Spreading device according to claim 9 or 10, wherein the storage container (7) has the same width as the trough (18).

12. Dough processing apparatus (1) for processing dough, in particular for producing pasta (4), comprising a spreading device (3) according to any one of claims 9 to 11 or a transverse distribution device according to any one of claims 1 to 8, and a conveying device (2) configured to convey pasta (4) under the spreading device (3).

## Revendications

1. Dispositif de distribution transversale (8) pour distribuer des produits alimentaires en vrac, en particulier des produits de saupoudrage (5) pour asperger des pâtes alimentaires (4), comprenant :
une cuve (18) qui présente une ouverture (20) sur un côté de sortie (19), et
un ensemble de transport (9) disposé dans ladite cuve (18) et configuré pour transporter des aliments en vrac dans une première direction (R) et dans une seconde direction (S) opposée à ladite première direction (R), ledit ensemble de transport (9) comprenant un premier transporteur rotatif (10) configuré pour transporter lesdits aliments en vrac dans ladite première direction (R) et un second transporteur rotatif (11) configuré pour transporter lesdits aliments en vrac dans ladite seconde direction (S),
**caractérisé en ce que** le premier convoyeur rotatif (10) est disposé de manière circonférentielle autour du second convoyeur rotatif (11).

2. Dispositif de distribution transversale selon la revendication 1, dans lequel le premier et le deuxième convoyeur rotatif (10, 11) sont disposés coaxialement l'un par rapport à l'autre.

3. Dispositif de distribution transversale selon l'une quelconque des revendications précédentes, dans lequel le premier et le deuxième convoyeur rotatif (10, 11) peuvent être entraînés indépendamment l'un de l'autre.

4. Dispositif de distribution transversale selon la revendication 1 ou 2, dans lequel les premier et deuxième convoyeurs rotatifs (10, 11) sont reliés entre eux de manière à être immobiles l'un par rapport à l'autre.

5. Dispositif de distribution transversale selon l'une quelconque des revendications précédentes, dans lequel le premier convoyeur rotatif (10) comprend une première hélice (12).

6. Dispositif de distribution transversale selon l'une quelconque des revendications précédentes, dans lequel le deuxième convoyeur rotatif (11) comprend une vis sans fin (13).

7. Dispositif de distribution transversale selon l'une quelconque des revendications précédentes, dans lequel le deuxième convoyeur rotatif (11) comprend une deuxième hélice (23).

8. Dispositif de distribution transversale selon l'une quelconque des revendications précédentes, dans lequel l'ensemble de convoyage (9) comprend un arbre de stabilisation (26) relié au deuxième convoyeur rotatif (11), augmentant ainsi la rigidité du deuxième convoyeur rotatif (11).

9. Dispositif de saupoudrage (3) pour un dispositif de traitement de pâte (1), comprenant un réservoir (7) configuré pour recevoir des produits alimentaires en vrac, en particulier des produits de saupoudrage (5) pour asperger des pâtes alimentaires (4), et un dispositif de distribution transversale (8) selon l'une des revendications précédentes.

10. Dispositif de saupoudrage selon la revendication 9, comprenant en outre un rouleau de saupoudrage (6) disposé de manière rotative sur le côté de sortie (19) de la cuve (18) et configuré pour recevoir des aliments transportés à travers l'ouverture (20) de la cuve (18).

11. Dispositif de saupoudrage selon la revendication 9 ou 10, dans lequel le réservoir (7) présente la même largeur que la cuve (18).

12. Dispositif de traitement de pâte (1) pour traiter de la pâte, en particulier pour produire des pâtes alimentaires (4), comprenant un dispositif de saupoudrage (3) selon l'une des revendications 9 à 11 ou un dispositif de distribution transversale selon l'une des revendications 1 à 8, et comprenant un dispositif de transport (2) configuré pour transporter des pâtes alimentaires (4) sous le dispositif de saupoudrage (3).
